(19) Europäisches Patentamt
European Patent Office
Office européen des brevets

(11) EP 2 157 126 B1

(12) EUROPÄISCHE PATENTSCHRIFT

(45) Veröffentlichungstag und Bekanntmachung des Hinweises auf die Patenterteilung:
**07.09.2011 Patentblatt 2011/36**

(51) Int Cl.:
***C08K 5/00*** (2006.01) ***C08K 5/17*** (2006.01)

(21) Anmeldenummer: **09178284.7**

(22) Anmeldetag: **30.05.2007**

(54) **Verwendung von ionischen Flüssigkeiten oder Lösungen aus Metallsalzen in ionischen Flüssigkeiten als Antistatika für Kunststoffe**

Use of ionic liquids or solutions made from metal salts in ionic liquids as antistatic for plastics

Utilisation de liquides ioniques ou de solutions à base de sels métalliques dans des liquides ioniques en tant qu'antistatiques pour plastiques

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **11.07.2006 DE 102006031952**

(43) Veröffentlichungstag der Anmeldung:
**24.02.2010 Patentblatt 2010/08**

(62) Dokumentnummer(n) der früheren Anmeldung(en) nach Art. 76 EPÜ:
**07725657.6 / 2 038 337**

(73) Patentinhaber: **Evonik Goldschmidt GmbH**
**45127 Essen (DE)**

(72) Erfinder:
- **Hubel, Roland**
  **45136 Essen (DE)**
- **Hell, Kerstin**
  **45141 Essen (DE)**
- **Weyershausen, Bernd**
  **45289 Essen (DE)**

(56) Entgegenhaltungen:
**WO-A-2005/021484**

- **DATABASE WPI Section Ch, Week 199850 Thomson Scientific, London, GB; Class A85, AN 1998-589868 XP002397048 & JP 10 265673 A (MITSUBISHI CHEM CORP) 6. Oktober 1998 (1998-10-06)**
- **DATABASE WPI Section Ch, Week 200457 Thomson Scientific, London, GB; Class A17, AN 2004-584511 XP002397049 & JP 2004 217931 A (SANYO CHEM IND LTD) 5. August 2004 (2004-08-05)**
- **DATABASE WPI Section Ch, Week 200512 Thomson Scientific, London, GB; Class A18, AN 2005-105340 XP002397050 & JP 2005 015573 A (MITSUBISHI ENG PLASTICS KK) 20. Januar 2005 (2005-01-20)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 157 126 B1

Printed by Jouve, 75001 PARIS (FR)

## Beschreibung

Gegenstand der Erfindung sind Antistatikformulierungen für Low Density und High Density Polyethylen, Polypropylen, Polystyrol, Vinylpolymere, Polyamide, Polyester, Polyacetale, Polycarbonate, Polyvinylchloride, ionische Flüssigkeiten oder eine synergistische Mischung aus ionischen Flüssigkeiten (IL), Alkalimetallsalzen und gegebenenfalls weiteren Hilfs- und Zusatzstoffen.

Kunststoffe wie Polyolefine, wie etwa Low Density und High Density Polyethylen, Polypropylen, Polystyrol, Vinylpolymere, Polyamide, Polyester, Polyacetale, Polycarbonate, Polyvinylchloride und insbesondere Polyurethane sind elektrische Isolatoren, auf denen sich bei der Herstellung, Verarbeitung und dem Gebrauch daraus hergestellter Folien und Formteile hohe Oberflächenladungen ansammeln können.

Diese statischen Aufladungen führen zu unerwünschten Effekten und ernsten Gefahrensituationen, welche von der Anziehung von Staub, Haftung von hygienisch bedenklichen Verunreinigungen, Zerstörung elektronischer Bauteile durch Funkenüberschläge, physiologisch unangenehmen elektrischen Schlägen, Entzündung brennbarer Flüssigkeiten in Behältern oder Rohren in denen diese gerührt, gegossen oder gefördert werden, bis hin zu Staubexplosionen beispielsweise beim Umfüllen mit Stäuben oder Mehlen gefüllter Großgebinde oder dem Gesteins- bzw. Kohleabbau reichen.

Es besteht daher seit dem Einsatz dieser Kunststoffe die Notwendigkeit, statische Aufladungen zu verhindern oder aber in einem Maße zu minimieren, dass diese nicht mehr gefährlich werden können.

Eine allgemein angewandte Methode, das Ableiten von Ladungen zu ermöglichen und die statische Aufladung zu minimieren, ist der Einsatz von Antistatika, d. h. nichtionischen oder ionischen grenzflächenaktiven Verbindungen und insbesondere Ammonium- und Alkalimetallsalzen.

Heute werden im Wesentlichen äußere und innere Antistatika eingesetzt.

Äußere Antistatika werden als wässrige oder alkoholische Lösungen durch Sprühen, Aufstreichen oder Tauchen und anschließender Lufttrocknung auf die Oberfläche der Kunststoffe aufgetragen. Der verbleibende antistatische Film ist auf fast allen Kunststoffen wirksam, hat aber den Nachteil, dass er durch Reibung oder Flüssigkeit sehr leicht und ungewollt wieder entfernt wird.

Aufgrund des fehlenden Depoteffektes der aus dem Inneren der Polymermasse nachmigrierenden Antistatikamoleküle (wie bei den inneren Antistatika vorhanden), weisen externe Antistatika keine Langzeitwirkung auf.

Daher werden vorzugsweise innere Antistatika verwendet, welche der Polymermasse soweit als möglich in reiner Form, ansonsten in Form so genannter "master-batches", d.h. konzentrierten Formulierungen, vor oder während der Verarbeitung zugesetzt werden und darin während des Injektions- oder Extrusionsprozesses homogen verteilt werden.

Nach heutigen, durch Versuchen belegten Vorstellungen, migrieren die Moleküle aufgrund ihrer bedingten Unverträglichkeit kontinuierlich an die Oberflächen der Polymermassen und reichern sich dort an, bzw. ersetzen Verluste. Der hydrophobe Teil verbleibt dabei im Polymer, der hydrophile Teil bindet in der Atmosphäre befindliches Wasser und bildet eine leitende Schicht, welche Ladungen bereits bei einigen zehn oder hundert Volt und nicht erst bei gefährlichen einigen tausend Volt an die Atmosphäre ableiten kann. Auf diese Weise wird gewährleistet, dass sich über einen längeren Zeitraum eine wirksame Menge Antistatika an der Oberfläche befindet.

Die Migrationsrate (Diffusionsgeschwindigkeit) ist jedoch ein kritischer Faktor:

Ist sie zu groß, können sich (kristalline) Strukturen niedriger Energie ausbilden, welche die Fähigkeit Feuchtigkeit zu binden verlieren und dadurch einmal den Antistatikeffekt deutlich reduzieren und außerdem an der Oberfläche unerwünschte Schmierfilme erzeugen, mit allen damit verbundenen ästhetischen und verarbeitungstechnischen Nachteilen für beispielsweise die Druck-, Verpackungs- oder Lebensmittelindustrie.

Ist die Migrationsrate zu gering, wird keine oder keine in praxisgerechten Zeiten ausreichende Wirkung erzielt.

Es werden daher bereits Kombinationen aus schnell und langsam migrierenden Antistatika eingesetzt, um bei einer ausreichend schnellen Anfangswirkung auch eine über Wochen und Monate anhaltende Langzeitwirkung zu erzielen.

Typische Thermoplaste haben Oberflächenwiderstände im Bereich von $10^{16}$ bis $10^{14}$ Ohm und können daher Spannungen von bis zu 15.000 Volt aufbauen. Wirksame Antistatika sollten daher die Oberflächenwiderstände der Kunststoffe auf $10^{10}$ Ohm oder darunter abbauen können.

Daneben ist noch zu berücksichtigen, dass Antistatika die physikalischen und technischen Polymereigenschaften wie beispielsweise Bedruckbarkeit, Siegelfähigkeit, thermische Stabilität, Formbeständigkeit oder Spannungsrissbeständigkeit beeinflussen können. Insbesondere im Falle von Polyurethanschäumen ist ein Einfluss der Antistatika auf die Zellstruktur und- beschaffenheit und damit auf sämtliche physikalische Eigenschaften in jedem Fall unerwünscht. Zur Minimierung dieser Effekte sollten sie daher bereits in geringen Konzentrationen wirksam werden.

Metallsalze sind bekannte und wirksame Antistatika. Sie haben jedoch den Nachteil, dass sie zur homogenen Verteilung in Kunststoffen vor der Anwendung gelöst werden müssen. Übliche Lösungsmittel sind Alkohole, Ether, Ester, Polyether, cyclische Ether, cyclische Ester, Amide, cyclische Amide, aromatische Verbindungen oder ganz allgemein

organische Lösungsmittel.

Die Löslichkeit ist jedoch zum Teil sehr gering, so dass für ausreichend wirksame Einsatzkonzentrationen große Mengen an Lösungsmittel verwendet werden müssen.

Sofern diese Antistatikaformulierungen in thermoplastischen und auch duroplastischen Kunststoffen eingesetzt werden, haben sie den Nachteil, dass sie die optischen und vor allem die physikalischen Eigenschaften des Endproduktes nachteilig beeinflussen.

In reaktiven Mehrkomponentensystemen können gegebenenfalls vorhandene reaktive Gruppen des Lösungsmittels bzw. anderer Bestandteile der Antistatikaformulierungen unerwünscht an der Reaktion teilnehmen und so insbesondere die physikalischen Eigenschaften des Endproduktes verändern. In der Praxis werden daher die Metallsalze vorzugsweise in einem der Formulierungsbestandteile gelöst Daher werden diese Antistatika/Metallsalze häufig in Lösemitteln gelöst, die Bestandteil sämtlicher Formulierungen sind, wie z.B. Ethylenglykol, Propylenglykol oder aber andere reaktive organische Lösemittel. Nachteilig ist hierbei, dass üblicherweise der Anteil dieser Formulierungsbestandteile, die dann nicht nur als Reaktivkomponente sondern entweder zusätzlich oder auch ausschließlich als Lösungsmittel in der Antistatikformulierung verwendet werden insgesamt nicht höher sein darf als es ohne den Zusatz der Antistatikformulierung der Fall wäre, um die physikalischen Eigenschaften des Endproduktes möglichst nicht zu verändern.

In der Praxis bestand daher ein Bedarf an einem Lösungsmittel für Metallsalze, welches universell einsetzbar ist und ein hohes Lösungsvermögen für eine Vielzahl von Metallsalzen besitzt und gegenüber den Reaktionskomponenten weitgehend inert ist oder aber auch Bestandteil der Formulierung ist bzw. keinen negativen Einfluss auf die physikalischen Eigenschaften des Endproduktes hat.

Eine Aufgabe der Erfindung war es daher ein Lösungsmittel mit verbesserter Lösungsmittelcharakteristik für Metallsalze zur Verfügung zu stellen, wobei die resultierende Lösung aus Lösungsmittel und Metallsalz - vorteilhafterweise verbesserte - Antistatikeigenschaften in Kunststoffen ausgewählt aus der Gruppe umfassend Low Density und High Density Polyethylen, Polypropylen, Polystyrol, Vinylpolymere, Polyamide, Polyester, Polyacetale, Polycarbonate, Polyvinylchloride aufweisen soll.

Überraschenderweise wurde nun gefunden, dass bestimmte ionische Flüssigkeiten bessere Lösungsmittel für viele Metallsalze darstellen als die oben angeführten Di- und Polyole. Zur Herstellung von wirksamen Anstistatikaformulierungen sind daher deutlich geringere Mengen an Löungsmittel erforderlich, um einen effektiven Gehalt an Metallsalz zur Verbesserung der Leitfähigkeit in Kunststoffen wie Low Density und High Density Polyethylen, Polypropylen, Polystyrol, Vinylpolymere, Polyamide, Polyester, Polyacetale, Polycarbonate, Polyvinylchloride einzubringen.

Überraschenderweise wurde weiterhin gefunden, dass eine Kombination von ionischen Flüssigkeiten und Di- oder Polyolen bzw. deren Mono- oder Dialkylether und -ester, insbesondere Ethylenglykol, Butandiol, Di-, Tri-, Tetraethylen bzw. -propylenglykol, eine synergistische Wirkung hinsichtlich des Lösungsvermögens aufweist.

Überraschenderweise wurde weiterhin gefunden, dass diese synergistische Kombination ihrerseits einen synergistischen Effekt hinsichtlich der Verbesserung der antistatischen Wirkung in Kunststoffen wie Low Density und High Density Polyethylen, Polypropylen, Polystyrol, Vinylpolymere, Polyamide, Polyester, Polyacetale, Polycarbonate, Polyvinylchloride hat.

Überraschenderweise wurde weiterhin gefunden, dass die ionischen Flüssigkeiten bereits ohne gelöste Metallsalze eine verbesserte antistatische Wirkung aufweisen.

Ein Gegenstand der Erfindung ist daher die Verwendung von ionischen Flüssigkeiten als Antistatika für Kunststoffe ausgewählt aus der Gruppe umfassend Low Density und High Density Polyethylen, Polypropylen, Polystyrol, Vinylpolymere, Polyamide, Polyester, Polyacetale, Polycarbonate, Polyvinylchloride.

Ein weiterer Gegenstand der Erfindung ist die Verwendung von Lösungen aus Metallsalzen in ionischen Flüssigkeiten als Antistatika für Kunststoffe wie Low Density und High Density Polyethylen, Polypropylen, Polystyrol, Vinylpolymere, Polyamide, Polyester, Polyacetale, Polycarbonate, Polyvinylchloride.

Ein weiterer Gegenstand der Erfindung ist die Verwendung von Lösungen aus Metallsalzen in synergistischen Mischungen aus ionischen Flüssigkeiten und Mono-, Di- und/oder Polyolen sowie deren Mono- oder Dialkylether und -ester, insbesondere Ethylenglkol, Butandiol, Di-, Tri-, Tetraethylen bzw. -propylenglykol oder auch Mischungen von Mono-, Di- und/oder Polyolen sowie deren Mono- oder Dialkylether und -ester, insbesondere Ethylenglkol, Butandiol, Di-, Tri-, Tetraethylen bzw. -propylenglykol als Antistatika für Kunststoffe wie Low Density und High Density Polyethylen, Polypropylen, Polystyrol, Vinylpolymere, Polyamide, Polyester, Polyacetale, Polycarbonate, Polyvinylchloride.

Weitere Gegenstände der Erfindung sind gekennzeichnet durch die Ansprüche.

Ein bevorzugtes erfindungsgemäßes Verfahren basiert demgemäß auf die Verwendung von ionischen Flüssigkeiten als Lösungsmittel (Compatiblizer) für ionisierbare Metallsalze (Leitsalze), insbesondere Alkalimetallsalze, wobei diesen Mischungen weitere organische Lösungsmittel zugesetzt werden können, um einen möglichst hohen Leitsalzgehalt einzustellen.

Als ionische Flüssigkeiten ("ionic liquids") bezeichnet man allgemein bei niedrigen Temperaturen (< 100 °C) schmelzende Salze, die eine neuartige Klasse von Flüssigkeiten mit nichtmolekularem, ionischem Charakter darstellen. Im Gegensatz zu klassischen Salzschmelzen, die hochschmelzende, hochviskose und sehr korrosive Medien darstellen,

sind ionische Flüssigkeiten bereits bei niedrigen Temperaturen flüssig und relativ niedrig viskos (K.R. Seddon J. Chem. Technol. Biotechnol. 1997, 68, 351-356).

Ionische Flüssigkeiten bestehen in den meisten Fällen aus Anionen wie zum Beispiel Halogeniden, Carboxylaten, Phosphaten, This cyanat, Isothiocyanat, Dicyanamid, Sulfat, Alkylsulfaten, Sulfonaten, Alkylsulfonaten, Tetrafluoroborat, Hexafluorophosphat oder auch Bis(trifluormethylsulfonyl)imid kombiniert mit zum Beispiel substituierten Ammonium-, Phosphonium-, Pyridinium- oder Imidazolium-Kationen, wobei die vorgenannten Anionen und Kationen eine kleine Auswahl aus der großen Zahl möglicher Anionen und Kationen darstellen und damit kein Anspruch auf Vollständigkeit erhoben oder gar eine Einschränkung vorgegeben werden soll.

Die erfindungsgemäß mitverwendeten ionischen Flüssigkeiten setzen sich aus mindestens einem quartären Stickstoff und/oder Phosphorverbindung und mindestens einem Anion zusammen und ihr Schmelzpunkt liegt unterhalb ca. + 250 °C, vorzugsweise unterhalb ca. + 150 °C, insbesondere unterhalb ca. + 100 °C. Die Mischungen von IL + Lösungsmittel ist bei Raumtemperatur flüssig. Die in dem erfindungsgemäßen Verfahren bevorzugt eingesetzten ionischen Flüssigkeiten bestehen aus mindestens einem Kation der allgemeinen Formeln:

$$R^1R^2R^3R^4N^+ \quad (1)$$

$$R^1R^2N^+{=}CR^3R^4 \quad (2)$$

$$R^1R^2R^3R^4P^+ \quad (3)$$

$$R^1R^2P^+{=}CR^3R^4 \quad (4)$$

in denen

$R^1$,$R^2$,$R^3$,$R^4$ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest, insbesondere -$CH_3$) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C (O)-, -(O)C-O-, -NH-C(O)-, -(O)C-NH, -($CH_3$)N-C(O)-, -(O)C-N($CH_3$)-, -S($O_2$)-O-, -O-S($O_2$)-, -S ($O_2$)-NH-, -NH-S ($O_2$)-, -S($O_2$)-N($CH_3$)-, -N ($CH_3$)-S($O_2$)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', $NH_2$, N(H)R', $N(R')_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -$(R^5\text{-}O)_n$-$R^6$. bedeuten,
wobei
$R^5$ ein 2 bis 4 Kohlenstoffatome enthaltender linearer oder verzweigter Kohlenwasserstoffrest,
n 1 bis 100, vorzugsweise 2 bis 60, ist und
$R^6$ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-$R^7$ mit

$R^7$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Als Kationen kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5-bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (5), (6) und (7) beschreiben, wobei die heterocyclischen Ringe gegebenenfalls auch mehrere Hetereoatome enthalten können

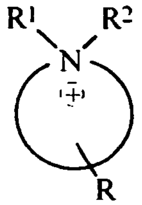 (5) 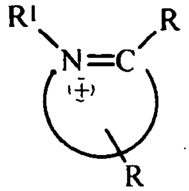 (6) 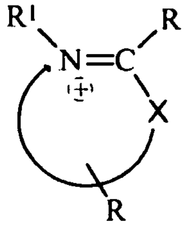 (7)

und worin die Substituenten die folgende Bedeutung haben

R ist ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen.
$R^1$ und $R^2$ besitzen dabei die vorgenannte Bedeutung,
$R^{1a}$ Wasserstoff einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR’ mit R’ gleich einem gegebenenfalls Doppelbindungen enthaltenden $C_1$-$C_{30}$-Alkylrest, insbesondere $-CH_3$) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, $-(CH_3)N-C(O)-$, $-(O)C-N(CH_3)-$, $-S(O_2)-O-$, $-O-S(O_2)-$, -S(O)-NH-, $-NH-S(O_2)-$, $-S(O_2)-N(CH_3)-$, $-N(CH_3)-S(O_2)-$, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR’, $NH_2$, N(H)R’, $N(R')_2$ (mit R’ gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß $-(R^5-O)_n-R^6$ bedeuten,
X ist ein Sauerstoffatom, ein Schwefelatom oder ein substituiertes Stickstoffatom (X = O, S, $NR^{1a}$).

Beispiele für cyclische Stickstoffverbindungen der vorgenannten Art sind Pyrrolidin, Dihydropyrrol, Pyrrol, Imidazolin, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die cyclischen Stickstoffverbindungen der allgemeinen Formeln (5), (6) und (7) können unsubstituiert (R = H), einfach oder auch mehrfach durch den Rest R substituiert sein, wobei bei einer Mehrfachsubstitution durch R die einzelnen Reste R unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4-bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen aneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, Pyridazin, Pyrimidin, 2,3-, 2,5-und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen der allgemeinen Formel (8) haben sich als Bestandteil ionischer Flüssigkeit bewährt.

Als Kationen kommen ferner Ionen in Betracht, welche zwei Stickstoffatome enthalten und durch die allgemeine Formel (8) wiedergegeben sind

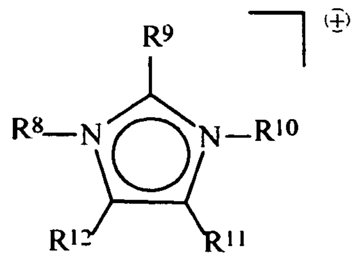

(8)

in denen

$R^8$,$R^9$,$R^{10}$,$R^{11}$,$R^{12}$ gleich oder unterschiedlich sind und Wasserstoff, einen linearen oder verzweigten gegebenenfalls Doppelbindungen enthaltenden aliphatischen Kohlenwasserstoffrest mit 1 bis 30, vorzugsweise 1 bis 8, insbesondere 1 bis 4 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -($CH_3$)N-C(O)-, - (O)C-N ($CH_3$)-,-S($O_2$)-O-, -O-S ($O_2$)-, -S($O_2$)-NH-, -NH-S($O_2$)-, -S($O_2$)-N($CH_3$)-. -N($CH_3$)-S($O_2$)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', $NH_2$, N (H)R', N(R')$_2$ mit R' gleich einem gegebenenfalls Doppelbindungen enthaltenden $C_1$-$C_{30}$-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -($R^5$-O)$_n$-$R^6$ bedeuten, wobei

$R^5$ ein 2 bis 4 Kohlenstoffatome enthaltender Kohlenwasserstoffrest,

n 1 bis 100 ist und

$R^6$ Wasserstoff, einen linearen oder verzweigten gegebenenfalls Doppelbindungen enthaltenden aliphatischen Kohlenwasserstoffrest mit 1 bis 30 Kohlenstoffatomen einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-$R^7$ mit
$R^7$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Die erfindungsgemäß bevorzugt eingesetzten ionischen Flüssigkeiten bestehen aus mindestens einem der vorgenannten Kationen kombiniert mit jeweils einem Anion. Bevorzugte Anionen werden ausgewählt aus der Gruppe - ohne Anspruch auf Vollständigkeit - der Halogenide, Bis(perfluoralkylsulfonyl)amide bzw. -imide wie z.B. Bis(trifluormethylylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat. Weiterhin sind Dicyanamid, Thiocyanat, Isothiocyanat, Tetraphenylborat, Tetrakis(pentafluorphenyl)borat, Tetrafluoroborat, Hexafluorophosphat, Polyetherphosphate und Phosphat bevorzugte Anionen.

Entscheidend ist, dass in der gebrauchsfertigen Mischung, die erfindungsgemäß als Antistatikum in Kunststoffen eingesetzt wird, die Komponenten (IL(s) + Leitsalz(e) + Lösungsmittel) in einer ausreichenden Menge vorhanden sind, so dass die Mischung einen möglichst hohen Anteil an Leitsalz(en) enthält und vorzugsweise bei < 100 °C, besonders bevorzugt bei Raumtemperatur flüssig ist.

Erfingungsgemäß bevorzugt sind solche ionische Flüssigkeiten bzw. deren Mischungen, die eine Kombination eines 1,3-Dialkylimidazolium-, 1,2,3-Trialkylimidazolium-, 1,3-Dialkylimidazolinium- und 1,2,3-Trialkylimidazoliniumkations mit einem Anion ausgesucht aus der Gruppe der Halogenide, Bis(trifluormethylylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis(pentafluorphenyl)borat, Tetrafluoroborat, Hexafluorophosphat darstellen. Darüber hinaus können auch einfache, kommerziell erhältliche, azyklische quarternäre Ammoniumsalze wie z.B. TEGO® IL T16ES, TEGO® IL K5MS oder auch Rezol Heqams (Produkte der Goldschmidt GmbH) eingesetzt werden.

Zur Herstellung der synergistisch wirkenden Kombinationen werden neben den ionischen Flüssigkeiten insbesondere Diole ausgewählt aus der Gruppe Ethylen-, Propylen-, Butylen-, Diethylen-, Triethylen-, Tetraethylen-, Dipropylen-, Tripropylen-, Tetrapropylenglycol sowie die entsprechenden Mono- und Dialkylether eingesetzt.

Bevorzugte synergistische Kombinationen bestehen aus mindestens einer oder mehreren ionischen Flüssigkeiten ausgesucht aus der Gruppe der 1,3-Dialkylimidazolium- bzw. der 1,3-Dialkylimidazoliniumsalze und einem oder mehreren Di- und oder Polyolen ausgesucht aus der Gruppe Ethylenglycol, Propylenglycol, Polyetherole sowie einem Alkalimetallsalz.

Erfingungsgemäß besonders bevorzugt sind Kombinationen aus mindestens einer ionischen Flüssigkeit und mindestens einem Diol ausgesucht aus der Gruppe Ethylenglykol, Diethylenglykol und Butandiol.

Das Mischungsverhältnis von ionischer Flüssigkeit zu der Alkoholkomponente ist innerhalb relativ weiter Grenzen variierbar und wird sowohl durch die Struktur der beiden Komponenten als auch durch das mitverwendete Leitsalz beeinflusst. Da aber aus den genannten Gründen der Fremdanteil in den Kunststoffen möglichst gering gehalten werden soll, wird der Anteil der Alkoholkomponente möglichst im unteren Bereich gehalten mit dem gerade noch eine synergistische Wirkung erzielt werden kann.

Im Allgemeinen werden mit ternären Mischungen sichere Ergebnisse erzielt bei einem Mischungsverhältnis von ionischer Flüssigkeit zu der Alkoholkomponente im Bereich von etwa 1 : 10 bis 10 : 1. In einer solchen Mischung sollte das Alkalimetallsalz mit einem Anteil von 0,1 bis 75 Gewichts-%, vorzugsweise mit einem Anteil von 0,5 bis 50 Gewichts-%, besonders bevorzugt mit einem Anteil von 5 bis 30 Gewichts-% enthalten sein.

Die erfindungsgemäß mitverwendeten Salze sind die auf diesem Gebiet üblicherweise verwendeten einfachen oder komplexen Verbindungen wie beispielsweise insbesondere Alkalimetallsalze der Anionen: Bis(perfluoralkylsulfonyl) amid bzw. -imid wie z.B. Bis(trifluormethylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat, vorzugsweise Anionen der Verbindungen Thiocyanat, Isothiocyanat, Dicyanamid, Tetraphenylborat, Tetrakis(pentafluorphenyl)borat, Tetrafluoroborat, Hexafluorophosphat, Phosphat und Polyetherphosphate.

Bevorzugte Mischungen sind insbesondere solche, die als Alkalimetallsalz NaSCN bzw. $NaN(CN)_2$ und $KPF_6$, und ein Imidazolinium- bzw. Imidazoliumsalz, vorzugsweise 1-Ethyl-3-methylimidazoliumethylsulfat (EMIM ES) als IL enthalten, wie EMIM ES/$NaN(CN)_2$ oder EMIM ES/NaN(CN)2/LG.

Darstellung erfindungsgemäßer Beispiele:

Eingesetzte Materialien:

| | |
|---|---|
| $KPF_6$ | Kaliumhexafluorophosphat |
| $NaN(CN)_2$ | Natriumdicyanamid |
| NaSCN | Natriumthiocyanat |
| KSCN | Kaliumthiocyanat |
| LiBTA | Lithium-bis(trifluormethylsulfonyl)imid |
| EG | Ethylenglycol |
| EP-S 89 | 7 % $KPF_6$ in Ethylenglycol |
| Ionische | Flüssigkeiten (IL) |

| | |
|---|---|
| TEGO® IL T16ES | Ethyl-bis(polyethoxyethanol)-talgalkylammoniumethylsulfat |
| BMIM TC | 1-Butyl-3-methylimidazoliumthiocyanat |
| EMIM BR | 1-Ethyl-3-methylimidazoliumbromid |
| MMIM MS | 1,3-Dimethylimidazoliummethylsulfat |

(fortgesetzt)

| | |
|---|---|
| EMIM ES | 1-Ethyl-3-methylimidazoliumethylsulfat |

Eingesetztes Equipment:

Die synergistische Mischung von ionischer Flüssigkeit, Leitsalz und organischem Lösungsmittel wurden mittels einfacher Magnetrührer im Labor hergestellt. Gerührt wird so lange bis eine klare Lösung erhalten wird.

Darstellung der Mischungen:

Für die Darstellung erfindungsgemäßer Formulierungen werden die einzelnen Rezepturbestandteile bei Raumtemperatur oder zum Teil auch bei erhöhter Temperatur wenn nötig aufgeschmolzen, abgemischt und gut verrührt bis eine klare Lösung entsteht. Gegebenenfalls muss die Lösung vor dem Gebrauch etwas erwärmt werden.

Um ein Additiv/eine Additivabmischung auf antistatische Wirkung zu prüfen, wird ein Prüfkörper hergestellt.

Messung des Oberflächenwiderstandes (Messspannung 100 V):

Alle Prüfkörper werden bei Normklima (23 °C, 50 % Luftfeuchtigkeit) gelagert. 72 Stunden nach der Herstellung werden die Prüfkörper auf ihren Oberflächenwiderstand mittels Widerstandsmessgerät (Hochohm - Messgerät HM 307 der Firma Fetronic GmbH) untersucht. Der Oberflächenwiderstand des Prüfkörpers wird je dreimal an der Oberseite und dreimal an der Unterseite gemessen. Aus diesen Werten wird der Mittelwert gebildet. Anschließend wird der Prüfkörper in zwei Teile geschnitten. (Dicke a: 2,7 cm, Dicke b: 1,2 cm). Es wird nun je dreimal der Oberflächenwiderstand auf den Schnittflächen gemessen und jeweils der Mittelwert gebildet. Die gemessenen und direkt am Gerät abgelesenen Werte werden in Ohm [Ω] angegeben. Der Blindwert (Prüfkörper ohne Antistatikum) wird jeweils vor einer zugehörigen Messreihe neu bestimmt.

Aus dem Quotienten des Widerstandes (Mittelwert; siehe oben) des Prüfkörpers ohne Antistatikum (Blindwert) und des Widerstandes des jeweiligen Prüfkörpers mit Antistatikum ergibt sich der Verbesserungsfaktor (VbF) als Mittelwert der jeweils drei (ganzer Block, 2,7 cm Block und 1,2 cm Block) erhaltenen Werte.

Der relative Verbesserungsfaktor ($VbF_{rel}$) ist definiert als:

$$VbF_{rel} = \frac{\text{Verbesserungsfaktor}}{\text{(Anteile Alkalimetallsalz/0,1)}}$$

Der Anteil des Alkalimetallsalzes an der Gesamtformulierung errechnet sich aus dem Produkt des Gewichtsanteils des Alkalimetallsalzes im Antistatikum und der Einsatzmenge (Anteile) des Antistatikums. Damit gibt der relative Verbesserungsfaktor die Wirksamkeit der anorganischen Aktivkomponente (Alkalimetallsalz) pro 0,1 Anteile Alkalimetallsalz bei Zugabe von 2, 4, 6 und 8 Anteilen Antistatikformulierungen wieder.

## Patentansprüche

1. Verwendung von Lösungen aus Metallsalzen in ionischen Flüssigkeiten als Antistatika für Kunststoffe ausgewählt aus der Gruppe umfassend Low Density und High Density Polyethylen, Polypropylen, Polystyrol, Vinylpolymere, Polyamide, Polyester, Polyacetale, Polycarbonate, Polyvinylchloride.

2. Verwendung gemäß Anspruch 1, **dadurch gekennzeichnet, dass** Lösungen aus Metallsalzen in synergistischen Mischungen aus ionischen Flüssigkeiten und Di- und/oder Polyolen als Antistatika für Kunststoffe ausgewählt aus der. Gruppe umfassend Low Density und High Density Polyethylen, polypropylen, Polystyrol, Vinylpolymere, Polyamide, Polyester, Polyacetale, Polycarbonate, Polyvinylchloride verwendet werden.

3. Verwendung gemäß einem der Ansprüche 1 bis 2, **dadurch gekennzeichnet, dass** die ionischen Flüssigkeiten aus mindestens einem Kation der allgemeinen Formeln (1) bis (4) bestehen:

$R^1R^2R^3R^4N^+$ (1)

$R^1R^2N^+=CR^3R^4$ (2)

$R^1R^2R^3R^4P^+$ (3)

$R^1R^2P^+=CR^3R^4$ (4)

in denen

$R^1$,$R^2$,$R^3$,$R^4$ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, $-(CH_3)N-C(O)-$, $-(O)C-N(CH_3)-$, $-S(O_2)-O-$, $-O-S(O_2)-$, $-S(O_2)-NH-$, $-NH-S(O_2)-$, $-S(O_2)-N(CH_3)-$, $-N(CH_3)-S(O_2)-$, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', $NH_2$, N(H)R', $N(R')_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß $-(R^5-O)_n-R^6$ bedeuten,
wobei
$R^5$ ein 2 bis 4 Kohlenstoffatome enthaltender linearer oder verzweigter Kohlenwasserstoffrest,
n 1 bis 100, ist und
$R^6$ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest $-C(O)-R^7$ mit
$R^7$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

**4.** Verwendung von ionischen Flüssigkeiten oder Lösungen aus Metallsalzen in ionischen Flüssigkeiten gemäß Anspruch 3, **dadurch gekennzeichnet, dass** Kationen verwendet werden, die sich von gesättigten oder ungesättigten cyclischen Verbindungen sowie von aromatischen Verbindungen mit jeweils mindestens einem dreibindigen Stickstoffatom in einem 4-bis 10-gliedrigen heterocyclischen Ring der allgemeinen Formeln (5), (6) und (7) ableiten, wobei die heterocyclischen Ringe gegebenenfalls weitere Heteroatome enthalten können

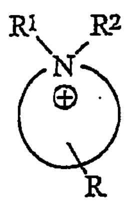

(5)

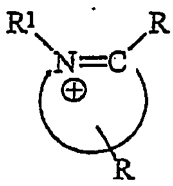

(6)

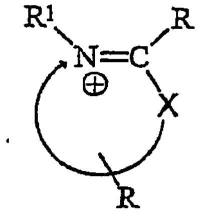

(7)

und worin die Substituenten die folgende Bedeutung haben

R ist ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen.
$R^1$ und $R^2$ besitzen dabei die vorgenannte Bedeutung,
$R^{1a}$ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest, insbesondere $-CH_3$) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, $-(CH_3)N-C(O)-$, $-(O)C-N(CH_3)-$, $-S(O_2)-O-$, $-O-S(O_2)-$, $-S(O_2)-NH-$, $-NH-S(O_2)-$, $-S(O)_2)-N(CH_3)-$, $-N(CH_3)-S(O_2)-$, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', $NH_2$, N(H)R', $N(R')_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß $-(R^5-O)_n-R^6$ bedeuten,
X ist ein Sauerstoffatom, ein Schwefelatom oder ein substituiertes Stickstoffatom (X = O, S, $NR^{1a}$) .

**5.** Verwendung von. ionischen Flüssigkeiten oder Lösungen aus Metallsalzen in ionischen Flüssigkeiten gemäß einem der Ansprüche 3 oder 4 als Anstistatika für Kunststoffe ausgewählt aus der Gruppe umfassend wie Low Density und High Density Polyethylen, Polypropylen, Polystyrol, Vinylpolymere, Polyamide, Polyester, Polyacetale, Polycarbonate, Polyvinylchloride.

**6.** Verwendung von ionischen Flüssigkeiten oder Lösungen aus Metallsalzen in ionischen Flüssigkeiten als Antistatika für Kunststoffe gemäß Anspruch 5, **dadurch gekennzeichnet, dass** die ionischen Flüssigkeiten aus mindestens einem Kation der allgemeinen Formel (8) mitverwendet werden

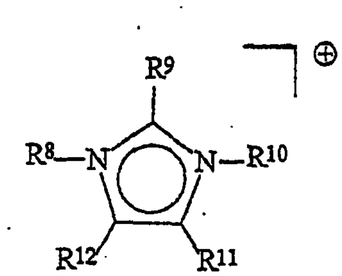

(8)

in denen

$R^8$,$R^9$,$R^{10}$,$R^{11}$,$R^{12}$ gleich oder unterschiedlich sind und Wasserstoff, einen linearen oder verzweigten gegebenenfalls Doppelbindungen enthaltenden aliphatischen Kohlenwasserstoffrest mit 1 bis 30, vorzugsweise 1 bis 8, insbesondere 1 bis 4 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -$(CH_3)$N-C(O)-, -(O)C-N(CH3)-, -$S(O_2)$-O-, -O-$S(O_2)$-, -$S(O_2)$-NH-, -NH-$S(O_2)$-, -$S(O_2)$-$N(CH_3)$-, -$N(CH_3)$-$S(O_2)$-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', $NH_2$, N(H)R', $N(R')_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -$(R^5\text{-}O)_n$-$R^6$ bedeuten, wobei

$R^5$ ein 2 bis 4 Kohlenstoffatome enthaltender Kohlenwasserstoffrest,
n 1 bis 100 ist und

$R^6$ Wasserstoff, einen linearen oder verzweigten gegebenenfalls Doppelbindungen enthaltenden aliphatischen Kohlenwasserstoffrest mit 1 bis 30 Kohlenstoffatomen einen cycloaliphatischen gegebenenfalls Doppelbindungen enthaltenden Kohlenwasserstoffrest mit 5 bis 40 Kohlenstoffatomen; einen aromatischen Kohlenwasserstoffrest mit 6 bis 40' Kohlenstoffatomen, einen Alkylarylrest mit 7 bis 40 Kohlenstoffatomen bedeutet oder ein Rest -C(O)-$R^7$ mit
$R^7$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlen-stoffatomen, einem Alkylarylrest mit 7 bis 40 Kohlenstoffatomen ist.

**7.** Verwendung von ionischen Flüssigkeiten oder Lösungen von Metallsalzen in ionischen Flüssigkeiten gemäß mindestens einem der Ansprüche 3 bis 6, **dadurch gekennzeichnet, dass** die ionischen Flüssigkeiten ein Anion, ausgewählt aus der Gruppe der Halogenide, Bis(perfluoralkylsulfonyl) amid bzw. -imid wie z.B. Bis (trifluormethylsulfonyl) imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat enthalten, vorzugsweise Anionen der Verbindungen Thiocyanat, Isothiocyanat, Dicyanamid, Tetraphenylborat, Tetrakis-(pentafluorphenyl) borat, Tetrafluoroborat, Hexafluorophosphat, Phosphat und Polyetherphosphate, enthalten.

**8.** Verwendung von ionischen Flüssigkeiten oder Lösungen von Metallsalzen in ionischen Flüssigkeiten gemäß mindestens einem der Ansprüche 1 bis 2, **dadurch gekennzeichnet, dass** die ionischen Flüssigkeiten ein Kation ausgewählt aus Verbindungen der allgemeinen Formeln (1) und/oder (7) und ein Dicyanamid-, Thiocyanat-, Isothiocyanat-, Hexafluorophosphat-Anion enthalten.

9. Verwendung von ionischen Flüssigkeiten oder Lösungen von Metallsalzen in ionischen Flüssigkeiten gemäß mindestens einem der Ansprüche 1 bis 8, **dadurch gekennzeichnet, dass** Mischungen aus zwei oder mehreren ionischen Flüssigkeiten bestehend aus Kationen der allgemeinen Formeln (1) bis (8) jeweils kombiniert mit mindestens einem Anion eingesetzt werden.

10. Verwendung von Lösungen von Metallsalzen in ionischen Flüssigkeiten gemäß mindestens einem der Ansprüche 1 bis 9, **dadurch gekennzeichnet, dass** diese als Leitsalze mindestens ein Salz ausgewählt aus der Gruppe der insbesondere Alkalimetallsalze mit den Anionen Bis (perfluoralkylsulfonyl) amid bzw. -imid wie Bis (trifluormethylsulfonyl) imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrachloroaluminat, Saccharinat, Thiocyanat, Isothiocyanat, Dicyanamid, Tetraphenylborat, Tetrakis (pentafluorphenyl) - borat, Tetrafluoroborat, Hexafluorophosphat, Phosphat und Polyetherphosphate, enthalten.

## Claims

1. Use of solutions of metal salts in ionic liquids as antistatics for plastics selected from the group consisting of low density and high density polyethylene, polypropylene, polystyrene, vinyl polymers, polyamides, polyesters, polyacetals, polycarbonates, polyvinyl chlorides.

2. Use according to Claim 1, **characterized in that** solutions of metal salts in synergistic mixtures of ionic liquids and diols and/or polyols are used as antistatics for plastics selected from the group consisting of low density and high density polyethylene, polypropylene, polystyrene, vinyl polymers, polyamides, polyesters, polyacetals, polycarbonates, polyvinyl chlorides.

3. Use according to one of Claims 1 to 2, **characterized in that** the ionic liquids comprise at least one cation of the general formulae (1) to (4):

$$R^1R^2R^3R^4N^+ \quad (1)$$

$$R^1R^2N^+=CR^3R^4 \quad (2)$$

$$R^1R^2R^3R^4P^+ \quad (3)$$

$$R^1R^2P^+=CR^3R^4 \quad (4)$$

where

$R^1$, $R^2$, $R^3$, $R^4$ are identical or different and are each hydrogen, a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms, an alkylaryl radical having from 7 to 40 carbon atoms, a linear or branched aliphatic hydrocarbon radical which has from 2 to 30 carbon atoms and may contain double bonds and is interrupted by one or more heteroatoms (oxygen, NH, NR' where R' is a $C_1$-$C_{30}$-alkyl radical which may contain double bonds), a linear or branched aliphatic hydrocarbon radical which has from 2 to 30 carbon atoms and may contain double bonds and is interrupted by one or more functions selected from the group consisting of -O-C(O)-, -(O)C-0-, -NH-C(O)-, -(O)C-NH, $-(CH_3)N-C(O)-$, $-(O)C-N(CH_3)-$, $-S(O_2)-O-$, $-O-S(O_2)-$, $-S(O_2)-NH-$, $-NH-S(O_2)-$, $-S(O_2)-N(CH_3)-$, $-N(CH_3)-S(O_2)-$, a linear or branched aliphatic or cycloaliphatic hydrocarbon radical which has from 1 to 30 carbon atoms and may contain double bonds and is functionalized by terminal OH, OR', $NH_2$, N(H)R', $N(R')_2$ groups (where R' is a $C_1$-$C_{30}$-alkyl radical which may contain double bonds) or a polyether $-(R^5-O)_n-R^6$ having a blockwise or random structure, where

$R^5$ is a linear or branched hydrocarbon radical containing from 2 to 4 carbon atoms,
n is from 1 to 100 and
$R^6$ is hydrogen, a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms, an

alkylaryl radical having from 7 to 40 carbon atoms or a radical -C(O)-$R^7$, where
$R^7$ is a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms or an alkylaryl radical having from 7 to 40 carbon atoms.

4. Use of ionic liquids or solutions of metal salts in ionic liquids according to Claim 3, **characterized in that** cations are used which are derived from saturated or unsaturated cyclic compounds or from aromatic compounds having, in each case, at least one trivalent nitrogen atom in a 4- to 10-membered, heterocyclic ring of the general formulae (5), (6) and (7), where the heterocyclic rings may, if desired, also be able to contain further heteroatoms

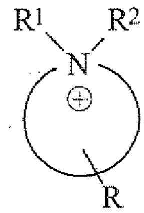

(5)

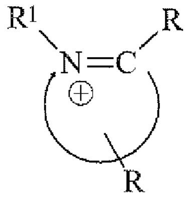

(6)

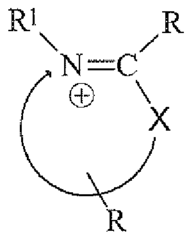

(7)

and in which the substituents have the following meanings:

R is a hydrogen, a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms or an alkylaryl radical having from 7 to 40 carbon atoms,
$R^1$ and $R^2$ have the abovementioned meanings,
$R^{1a}$ is hydrogen, a linear or branched aliphatic hydrocarbon radical which has from 1 to 30 carbon atoms and

may contain double bonds, a cycloaliphatic hydrocarbon radical which has from 5 to 40 carbon atoms and may contain double bonds, an aromatic hydrocarbon radical which has from 6 to 40 carbon atoms, an alkylaryl radical having from 7 to 40 carbon atoms, a linear or branched aliphatic hydrocarbon radical which has from 2 to 30 carbon atoms and may contain double bonds and is interrupted by one or more heteroatoms (oxygen, NH, NR' where R' is a $C_1$-$C_{30}$-alkyl radical which may contain double bonds, in particular $-CH_3$), a linear or branched aliphatic hydrocarbon radical which has from 2 to 30 carbon atoms and may contain double bonds and is interrupted by one or more functions selected from the group consisting of -O-C(O)-, -(O)C-O-, -NH-C(O)-, $-(CH_3)N-C(O)-$, $-(O)C-N(CH_3)-$, $-S(O_2)-O-$, $-O-S(O_2)-$, $-S(O_2)-NH-$, $-NH-S(O_2)-$, $-S(O_2)-N(CH_3)-$, $-N(CH_3)-S(O_2)-$, a linear or branched aliphatic or cycloaliphatic hydrocarbon radical which has from 1 to 30 carbon atoms and may contain double bonds and is functionalized by terminal OH, OR', $NH_2$, N(H)R', $N(R')_2$ groups (where R' is a $C_1$-$C_{30}$-alkyl radical which may contain double bonds) or a polyether $-(R^5-O)_n-R^6$ having a blockwise or random structure,

X is an oxygen atom, a sulfur atom or a substituted nitrogen atom (X = O, S, $NR^{1a}$) .

**5.** Use of ionic liquids or solutions of metal salts in ionic liquids according to either Claim 3 or 4 as antistatics for plastics selected from the group consisting of low density and high density polyethylene, polypropylene, polystyrene, vinyl polymers, polyamides, polyesters, polyacetals, polycarbonates, polyvinyl chlorides.

**6.** Use of ionic liquids or solutions of metal salts in ionic liquids as antistatics for plastics according to Claim 5, **characterized in that** the ionic liquids comprise at least one cation of the general formula (8)

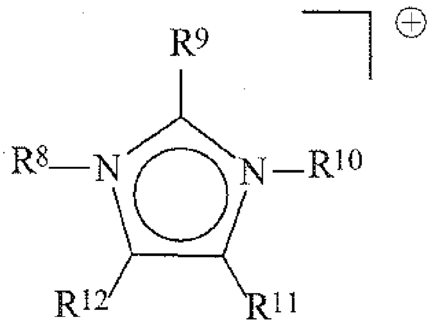

(8)

where

$R^8$, $R^9$, $R^{10}$, $R^{11}$, $R^{12}$ are identical or different and are each hydrogen, a linear or branched aliphatic hydrocarbon radical which has from 1 to 30, preferably from 1 to 8, in particular from 1 to 4, carbon atoms and may contain double bonds, a cycloaliphatic hydrocarbon radical which has from 5 to 40 carbon atoms and may contain double bonds, an aromatic hydrocarbon radical having from 6 to 40 carbon atoms, an alkylaryl radical having from 7 to 40 carbon atoms, a linear or branched aliphatic hydrocarbon radical which has from 1 to 30 carbon atoms and may contain double bonds and is interrupted by one or more heteroatoms (oxygen, NH, NR' where R' is a $C_1$-$C_{30}$-alkyl radical which may contain double bonds), a linear or branched aliphatic hydrocarbon radical which has from 1 to 30 carbon atoms and may contain double bonds and is interrupted by one or more functions selected from the group consisting of -0-C(O)-, -(O)C-O-, -NH-C(O)-, -(O)C-NH, $-(CH_3)N-C(O)-$, $-(O)C-N(CH_3)-$, $-S(O_2)-O-$, $-O-S(O_2)-$, $-S(O_2)-NH-$, $-NH-S(O_2)-$, $-S(O_2)-N(CH_3)-$, $-N(CH_3)-S(O_2)-$, a linear or branched aliphatic or cycloaliphatic hydrocarbon radical which has from 1 to 30 carbon atoms and may contain double bonds and is functionalized by terminal OH, OR', $NH_2$, N(H)R', $N(R')_2$ groups (where R' is a $C_1$-$C_{30}$-alkyl radical which may contain double bonds) or a polyether $-(R^5-O)_n-R^6$ which has a blockwise or random structure, where

$R^5$ is a hydrocarbon radical containing from 2 to 4 carbon atoms,

n is from 1 to 100 and

$R^6$ is hydrogen, a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms, an alkylaryl radical having from 7 to 40 carbon atoms or a radical $-C(O)-R^7$, where

$R^7$ is a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms or an alkylaryl radical having from 7 to 40 carbon atoms.

7. Use of ionic liquids or solutions of metal salts in ionic liquids according to at least one of Claims 3 to 6, **characterized in that** the ionic liquids contain an anion selected from the group consisting of halides, bis(perfluoroalkylsulfonyl) amides or -imides such as bis(trifluoromethylsulfonyl)imide, alkyltosylates and aryltosylates, perfluoroalkyltosylates, nitrate, sulfate, hydrogensulfate, alkylsulfates and arylsulfates, polyether sulfates and sulfonates, perfluoroalkylsulfates, sulfonate, alkylsulfonates and arylsulfonates, perfluorinated alkylsulfonates and arylsulfonates, alkylcarboxylates and arylcarboxylates, perfluoroalkylcarboxylates, perchlorate, tetrachloroaluminate, saccharinate, preferably anions of the compounds thiocyanate, isothiocyanate, dicyanamide, tetraphenylborate, tetrakis(pentafluorophenyl) borate, tetrafluoroborate, hexafluorophosphate, phosphate and polyether phosphates.

8. Use of ionic liquids or solutions of metal salts in ionic liquids according to at least one of Claims 1 to 2, **characterized in that** the ionic liquids contain a cation selected from among compounds of the general formulae (1) and/or (7) and a dicyanamide, thiocyanate, isothiocyanate, hexafluorophosphate anion.

9. Use of ionic liquids or solutions of metal salts in ionic liquids according to at least one of Claims 1 to 8, **characterized in that** mixtures of two or more ionic liquids comprising cations of the general formulae (1) to (8) in each case combined with at least one anion are used.

10. Use of ionic liquids or solutions of metal salts in ionic liquids according to at least one of Claims 1 to 9, **characterized in that** these contain, as electrolyte salts, at least one salt selected from the group consisting of, in particular, alkali metal salts with the anions bis (perfluoroalkylsulfonyl) amide or -imide such as bis(trifluoromethylsulfonyl)imide, alkyltosylates and aryltosylates, perfluoroalkyltosylates, nitrate, sulfate, hydrogensulfate, alkylsulfates and arylsulfates, polyether sulfates and sulfonates, perfluoroalkylsulfates, sulfonate, alkylsulfonates and arylsulfonates, perfluorinated alkylsulfonates and arylsulfonates, alkylcarboxylates and arylcarboxylates, perfluoroalkylcarboxylates, perchlorate, tetrachloroaluminate, saccharinate, thiocyanate, isothiocyanate, dicyanamide, tetraphenylborate, tetrakis(pentafluorophenyl)borate, tetrafluoroborate, hexafluorophosphate, phosphate and polyether phosphates.

## Revendications

1. Utilisation de solutions de sels métalliques dans des liquides ioniques, en tant qu'agents antistatiques pour matières plastiques choisies dans le groupe comprenant le polyéthylène basse densité et le polyéthylène haute densité, le polypropylène, le polystyrène, les polymères vinyliques, les polyamides, les polyesters, les polyacétals, les polycarbonates, les poly(chlorure de vinyle)s.

2. Utilisation selon la revendication 1, **caractérisée en ce qu'**on utilise des solutions de sels métalliques dans des mélanges synergiques de liquides ioniques et de di- et/ou polyols, en tant qu'agents antistatiques pour matières plastiques choisies dans le groupe comprenant le polyéthylène basse densité et le polyéthylène haute densité, le polypropylène, le polystyrène, les polymères vinyliques, les polyamides, les polyesters, les polyacétals, les polycarbonates, les poly(chlorure de vinyle)s.

3. Utilisation selon l'une quelconque des revendications 1 et 2, **caractérisée en ce que** les liquides ioniques sont constitués d'au moins un cation de formules générales (1) à (4) :

$$R^1R^2R^3R^4N^+ \qquad (1)$$

$$R^1R^2N^+{=}CR^3R^4 \qquad (2)$$

$$R^1R^2R^3R^4P^+ \qquad (3)$$

$$R^1R^2P^+{=}CR^3R^4 \qquad (4)$$

dans lesquelles

$R^1$, $R^2$, $R^3$, $R^4$ sont identiques ou différents et représentent un atome d'hydrogène, un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone, un radical alkylaryle ayant de 7 à 40 atomes de carbone, un radical hydrocarboné aliphatique linéaire ou ramifié ayant de 2 à 30 atomes de carbone, comportant éventuellement des doubles liaisons, interrompu par un ou plusieurs hétéroatomes (oxygène, NH, NR', R' représentant un radical alkyle en $C_1$-$C_{30}$ comportant éventuellement des doubles liaisons), un radical hydrocarboné aliphatique linéaire ou ramifié ayant de 2 à 30 atomes de carbone, comportant éventuellement des doubles liaisons, interrompu par une ou plusieurs fonctionnalités, choisie(s) dans le groupe constitué par -O-C(O)-, -(O)C-O-, -NH-C(O)-, -(O)C-NH-, -$(CH_3)$N-C(O)-, -(O)C-N$(CH_3)$-, -S$(O_2)$-O-, -O-S$(O_2)$-, -S$(O_2)$-NH-, -NH-S$(O_2)$-, -S$(O_2)$-N$(CH_3)$-, -N$(CH_3)$-S$(O_2)$-, un radical hydrocarboné aliphatique linéaire ou ramifié ou cycloaliphatique ayant de 1 à 30 atomes de carbone, comportant éventuellement des doubles liaisons, fonctionnalisé en bout de chaîne par OH, OR', $NH_2$, N(H)R', $N(R')_2$ (où R' représente un radical alkyle en $C_1$-$C_{30}$ comportant éventuellement des doubles liaisons) ou un polyéther de structure séquencée ou statistique selon -$(R^5\text{-}O)_n$-$R^6$,

$R^5$ représentant un radical hydrocarboné linéaire ou ramifié, contenant de 2 à 4 atomes de carbone,
n valant de 1 à 100, et
$R^6$ représentant un atome d'hydrogène, un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone, un radical alkylaryle ayant de 7 à 40 atomes de carbone ou un radical -C(O)-$R^7$ où

$R^7$ est un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone, un radical alkylaryle ayant de 7 à 40 atomes de carbone.

**4.** Utilisation de liquides ioniques ou de solutions de sels métalliques dans des liquides ioniques selon la revendication 3, **caractérisée en ce qu'**on utilise des cations qui dérivent de composés cycliques saturés ou insaturés ainsi que de composés aromatiques comportant chacun au moins un atome d'azote à trois liaisons dans un cycle hétérocyclique à 4-10 chaînons, de formules générales (5), (6) et (7), les cycles hétérocycliques pouvant éventuellement contenir d'autres hétéroatomes

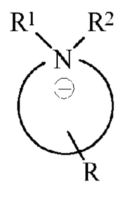

(5)

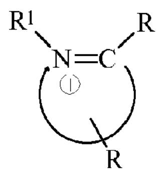

(6)

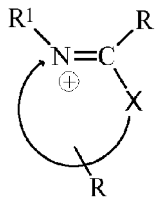

(7)

et dans lesquels les substituants ont les significations suivantes

R est un atome d'hydrogène, un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone ou un radical alkylaryle ayant de 7 à 40 atomes de carbone,
$R^1$ et $R^2$ ont les significations susmentionnées,
$R^{1a}$ représente un atome d'hydrogène, un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone, un radical alkylaryle ayant de 7 à 40 atomes de carbone, un radical hydrocarboné aliphatique linéaire ou ramifié ayant de 2 à 30 atomes de carbone, comportant éventuellement des doubles liaisons, interrompu par un ou plusieurs hétéroatomes (oxygène, NH, NR', R' représentant un radical alkyle en $C_1$-$C_{30}$ comportant éventuellement des doubles liaisons, en particulier $-CH_3$), un radical hydrocarboné aliphatique linéaire ou ramifié ayant de 2 à 30 atomes de carbone, comportant éventuellement des doubles liaisons, interrompu par une ou plusieurs fonctionnalités, choisie(s) dans le groupe constitué par -O-C(O)-, -(O)C-O-, -NH-C(O)-, $-(CH_3)N-C(O)-$, $-(O)C-N(CH_3)-$, $-S(O_2)-O-$, $-O-S(O_2)-$, $-S(O_2)-NH-$, $-NH-S(O_2)-$, $-S(O_2)-N(CH_3)-$, $-N(CH_3)-S(O_2)-$, un radical hydrocarboné aliphatique linéaire ou ramifié ou cycloaliphatique ayant de 1 à 30 atomes de carbone, comportant éventuellement des doubles liaisons, fonctionnalisé en bout de chaîne par OH, OR', $NH_2$, N(H)R', $N(R')_2$ (où R' représente un radical alkyle en $C_1$-$C_{30}$ comportant éventuellement des doubles liaisons), ou un polyéther de structure séquencée ou statistique selon $-(R^5-O)_n-R^6$
X X est un atome d'oxygène, un atome de soufre ou un atome d'azote substitué (X = O, S, $NR^{1a}$)

**5.** Utilisation de liquides ioniques ou de solutions de sels métalliques dans des liquides ioniques selon l'une quelconque des revendications 3 ou 4, en tant qu'agents antistatiques pour matières plastiques choisies dans le groupe comprenant le polyéthylène basse densité et le polyéthylène haute densité, le polypropylène, le polystyrène, les polymères vinyliques, les polyamides, les polyesters, les polyacétals, les polycarbonates, les poly(chlorure de vinyle)s.

**6.** Utilisation de liquides ioniques ou de solutions de sels métalliques dans des liquides ioniques, en tant qu'agents antistatiques pour matières plastiques selon la revendication 5, **caractérisée en ce qu'**on utilise en même temps les liquides ioniques à base d'au moins un cation de formule générale (8)

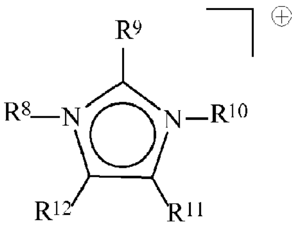

(8)

dans laquelle

$R^8$, $R^9$, $R^{10}$ $R^{11}$, $R^{12}$ sont identiques ou différents et représentent un atome d'hydrogène, un radical hydrocarboné aliphatique linéaire ou ramifié ayant de 1 à 30, de préférence de 1 à 8, en particulier de 1 à 4 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique

ayant de 6 à 40 atomes de carbone, un radical alkylaryle ayant de 7 à 40 atomes de carbone, un radical hydrocarboné aliphatique linéaire ou ramifié ayant de 1 à 30 atomes de carbone, comportant éventuellement des doubles liaisons, interrompu par un ou plusieurs hétéroatomes (oxygène, NH, NR', R' représentant un radical alkyle en $C_1$-$C_{30}$ comportant éventuellement des doubles liaisons), un radical hydrocarboné aliphatique linéaire ou ramifié ayant de 1 à 30 atomes de carbone, comportant éventuellement des doubles liaisons, interrompu par une ou plusieurs fonctionnalités, choisie(s) dans le groupe constitué par -O-C(O)-, -(O)C-O-, -NH-C(O)-, -(O)C-NH-, -$(CH_3)$N-C(O)-, -(O)C-N$(CH_3)$-, -S(O)-O-, -O-S$(O_2)$-, -S$(O_2)$-NH-, -NH-S$(O_2)$-, -S$(O_2)$-N$(CH_3)$-, -N$(CH_3)$-S$(O_2)$ -, un radical hydrocarboné aliphatique linéaire ou ramifié ou cycloaliphatique ayant de 1 à 30 atomes de carbone, comportant éventuellement des doubles liaisons, fonctionnalisé en bout de chaîne par OH, OR', $NH_2$, N(H)R', N$(R')_2$ (où R' représente un radical alkyle en $C_1$-$C_{30}$ comportant éventuellement des doubles liaisons) ou un polyéther de structure séquencée ou statistique, constitué à base de -$(R^5\text{-}O)_n$-$R^6$,

$R^5$ représentant un radical hydrocarboné contenant de 2 à 4 atomes de carbone,
n vaut de 1 à 100, et
$R^6$ représente un atome d'hydrogène, un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone, un radical alkylaryle ayant de 7 à 40 atomes de carbone ou un radical -C(O)-$R^7$ où

$R^7$ représente un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone, un radical alkylaryle ayant de 7 à 40 atomes de carbone.

**7.** Utilisation de liquides ioniques ou de solutions de sels métalliques dans des liquides ioniques selon au moins l'une des revendications 3 à 6, **caractérisée en ce que** les liquides ioniques contiennent un anion, choisi dans le groupe constitué par les halogénures, un bis (perfluoroalkylsulfonyl)-amide ou -imide comme par exemple le bis(trifluorométhylsulfonyl)imide, les alkyl- et aryltosylates, les perfluoroalkyltosylates, le nitrate, le sulfate, l'hydrogénosulfate, les alkyl- et arylsulfates, les polyéthersulfates et -sulfonates, les perfluoroalkylsulfates, le sulfonate, les alkyl- et arylsulfonates, les alkyl- et arylsulfonates perfluorés, les alkyl- et arylcarboxylates, les perfluoroalkylcarboxylates, le perchlorate, le tétrachloroaluminate, le saccharinate, de préférence contiennent les anions des composés thiocyanate, isothiocyanate, dicyanamide, tétraphénylborate, tétrakis(pentafluorophényl)borate, tétrafluoroborate, hexafluorophosphate, phosphate et polyétherphosphates.

**8.** Utilisation de liquides ioniques ou de solutions de sels métalliques dans des liquides ioniques selon au moins l'une des revendications 1 et 2, **caractérisée en ce que** les liquides ioniques contiennent un cation choisi parmi les composés de formules générales (1) et/ou (7) et un anion dicyanamide, thiocyanate, isothiocyanate, hexafluorophosphate.

**9.** Utilisation de liquides ioniques ou de solutions de sels métalliques dans des liquides ioniques selon au moins l'une des revendications 1 à 8, **caractérisée en ce qu'**on utilise des mélanges de deux ou plus de deux liquides ioniques constitués de cations des formules générales (1) à (8), combinés chacun à au moins un anion.

**10.** Utilisation de solutions de sels métalliques dans des liquides ioniques selon au moins l'une des revendications 1 à 9, **caractérisée en ce que** celles-ci contiennent en tant que sels conducteurs au moins un sel choisi dans le groupe des sels, en particulier de métaux alcalins, avec les anions bis (perfluoroalkylsulfonyl) amide ou -imide tels que le bis(trifluorométhylsulfonyl)imide, alkyl- et aryltosylates, perfluoroalkyltosylates, nitrate, sulfate, hydrogénosulfate, alkyl- et arylsulfates, polyéthersulfates et -sulfonates, perfluoroalkylsulfates, sulfonate, alkyl- et arylsulfonates, alkyl- et arylsulfonates perfluorés, alkyl- et arylcarboxylates, perfluoroalkylcarboxylates, perchlorate, tétrachloroaluminate, saccharinate, thiocyanate, isothiocyanate, dicyanamide, tétraphénylborate, tétrakis(pentafluorophényl)borate, tétrafluoroborate, hexafluorophosphate, phosphate et polyétherphosphates.

Abbildung 1:

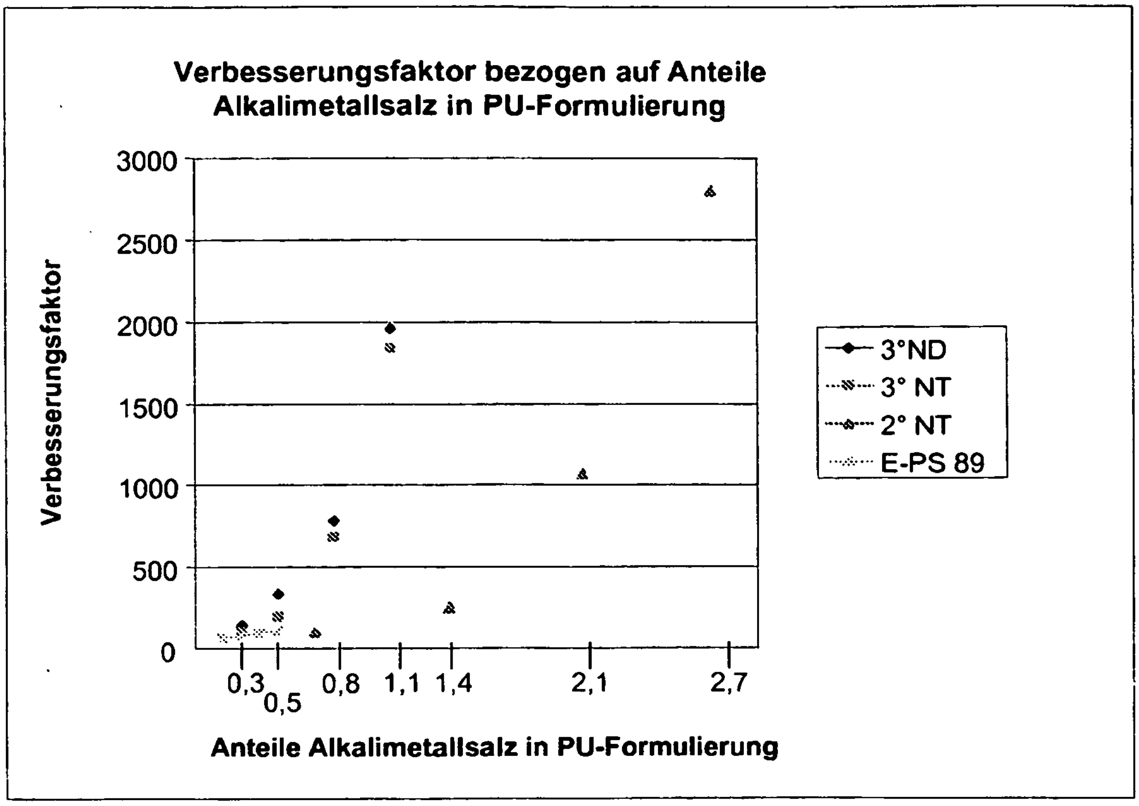
Verbesserungsfaktor bezogen auf Anteile Alkalimetallsalz in PU-Formulierung
Verbesserungsfaktor
3000
2500
2000
1500
1000
500
0
0,3
0,5
0,8
1,1
1,4
2,1
2,7
Anteile Alkalimetallsalz in PU-Formulierung
3°ND
3° NT
2° NT
E-PS 89

Abbildung 2:

| Mischung | Anteil Alkalimetallsalz (Antistatikformulierung)/Verbesserungsfaktor | | | |
|---|---|---|---|---|
| 3° ND | 0,273<br>(2)/138 | 0,544<br>(4)/328 | 0,82<br>6)/782 | 1,09<br>(8)/1952 |
| 3° NT | 0,265<br>(2)/105 | 0,53<br>(4)/192 | 0,8<br>(6)/684 | 1,06<br>(8)/1839 |
| 2° NT | 0,7<br>(2)/96 | 1,4<br>(4)/251 | 2,1<br>(6)/1078 | 2,8<br>(8)/2802 |
| EP-S 89 | 0,2<br>(2,86)/62 | 0,264<br>(3,77)/81 | 0,4<br>(5,7)/90 | 0,5<br>(7,4)/110 |

Abbildung 3:

**Relativer Verbesserungsfaktor $VbF_{rel.}$ (pro 0,1 Anteile Alkalimetallsalz) bei Zugabe von insgesamt 2, 4, 6 und 8 Anteile Antistatikformulierung zur PU-Formulierung**

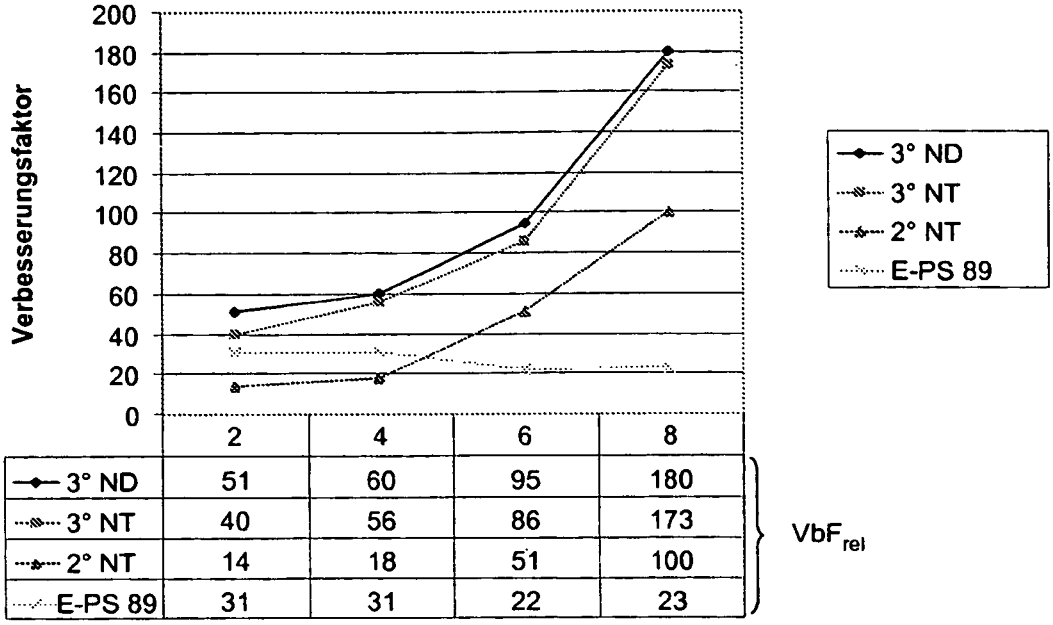


| | 2 | 4 | 6 | 8 |
|---|---|---|---|---|
| 3° ND | 51 | 60 | 95 | 180 |
| 3° NT | 40 | 56 | 86 | 173 |
| 2° NT | 14 | 18 | 51 | 100 |
| E-PS 89 | 31 | 31 | 22 | 23 |

} $VbF_{rel}$

**Anteil Antistatikformulierung in der PU-Formulierung**

$$VbF_{rel} = \frac{\text{Absoluter Verbesserungsfaktor}}{\text{(Anteile Alkalimetallsalz/0,1)}}$$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **K.R. Seddon.** *J. Chem. Technol. Biotechnol.,* 1997, vol. 68, 351-356